# EUROPEAN PATENT SPECIFICATION

(11) **EP 0 714 920 B1**
(45) Date of publication and mention of the grant of the patent: **05.11.1997**
(21) Application number: 95850214.8
(22) Date of filing: 30.11.1995
(51) Int. Cl.: C08F 10/00, C08F 4/655

(54) **Catalyst for polymerization of olefins**
Katalysator für Olefinpolymerisation
Catalyseur pour la polymérisation d'oléfines

(30) Priority: 01.12.1994 JP 323846/94
(43) Date of publication of application: 05.06.1996
(73) Proprietor: NIPPON OIL CO. LTD., Minato-ku Tokyo (JP)
(72) Inventor: Aida, Fuyuki, Yokohama-shi, Kanagawa-ken (JP); Tajima, Yoshio, Yokohama-shi, Kanagawa-ken (JP); Matsuura, Kazuo, Yokohama-shi, Kanagawa-ken (JP)
(74) Representative: Modin, Jan

(56) References cited:
- EP-A- 0 587 440
- EP-A- 0 679 662

## Description

This invention relates to catalysts useful for the production of olefinic polymers. The term olefinic polymers as used herein denotes both homopolymers and copolymers of olefinic hydrocarbons.

As disclosed in Japanese Patent Laid-Open Publication No. 58-19309, it has been proposed to produce ethylene homopolymers or ethylene-α-olefin copolymers among various polyolefins with use of a catalyst composition comprising a zirconium compound, typically a metallocene compound and an aluminoxane compound. This prior art catalyst, though reputed for high polymer yields, is liable to form such a homopolymer or copolymer which is of a low molecular weight and such a homopolymer which has a relatively narrow molecular weight distribution. With consideration given solely to an increase in the molecular weight of polyolefins, this may be achieved to some extent by the use of a selected metallocene compound. Japanese Laid-Open Patent Publication No. 63-251405 discloses the use of a dicyclopentadienyl hafnium compound. However, this hafnium compound is rather difficult to synthesize and inferior in catalylic activity to a dicyclopentadienyl zirconium compound. The hafnium compound is further disadvantageous in that the resultant polymers have a relatively narrow molecular weight distribution and in the case of copolymers fail to provide a modal distribution as narrow as desired. These requirements long sought for in the relevant industry have yet to be fulfilled. Aluminoxane compounds, methylaluminoxane compounds in particular, are known as useful promoters, if added in generous quantities, for providing increased yields of polymers, but they are prohibitive in price. A particular emphasis has therefore been placed on the availability of effective catalysts with a minimum usage of aluminoxane.

The present inventors have previously proposed (as disclosed in Japanese Laid-Open Patent Publication No. 6-248010) to use a novel catalyst composition for the production of olefinic polymers at an increased rate of yield in the total absence of or in the presence of a minimum amount of aluminoxane relative to a given transition metal compound. The present invention is directed to a further improvement in and relating to that prior proposal.

The invention provides a polymerization catalyst composition which comprises a compound (A) of the formula

Me¹(OR¹)ₚR² _{q}X¹ _{4-p-q} I

where R¹ and R² each are C₁-C₂₄ hydrocarbon moieties, X¹ is a halogen atom, Me¹ is titanium, zirconium or hafnium, p is 0 ≤ p≤ 4, q is 0 ≤ q ≤ 4, and p+q is 0 ≤ p+q ≤4;
a metal hydride compound (B) consisting at least of one of the compounds of the formulae:

(Ba) Me²HaR³ ₃₋ₐ II

(Bb) Me³[Me²HbR⁴(OR⁵)_{4-b-c}]_{Z} III

and (Bc) 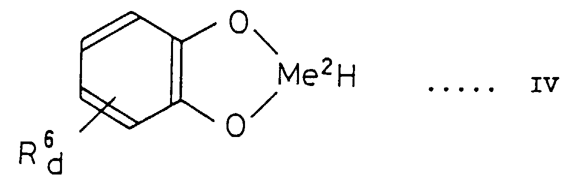 wherein R³, R⁴, R⁵ and R⁶ each are C₁-C₂₄ hydrocarbon moieties, Me² is an element of Group 13 in the Periodic Table, Me³ is an element of Group 1, 2 or 12 in the Periodic Table, Z is a valence of Me³, a, b, c and d are 1 ≤ a ≤ 3, 1 ≤ b ≤ 4, 0 ≤ c ≤ 3, 0 ≤ d ≤ 4, respectively and 1 ≤ b+c ≤ 4;
an organocyclic compound (C) having two or more conjugated double-bonds; and a borate and/or borane (D).

The inventive catalyst of the above definition further includes a modified organoaluminum compound (E) containing an Al-O-Al bond.

The catalysts provided in accordance with the invention contribute to the production of olefinic polymers having the following advantageous features:
1. Increased molecular weight
2. Wide and controllable molecular weight distribution
3. Narrow modal distribution where the resultant product is a copolymer, particularly ethylene-α-olefin copolymer
4. Minimum catalyst residues in the polymer products
5. Low melting point
6. Excellent heat-sealing ability

It has further been found that the polymers produced with use of the inventive catalyst are suitable for high speed molding such as a blown method, and give an extruded film highly transparent, resistant to blocking, tack-free and high tensile strength. The inventive catalyst composition if added with a modified organoaluminum compound can maintain a high level of catalytic efficiency even with a minimum usage of such aluminum compound. In addition, the catalysts of the invention can be prepared with utmost ease and efficiency.

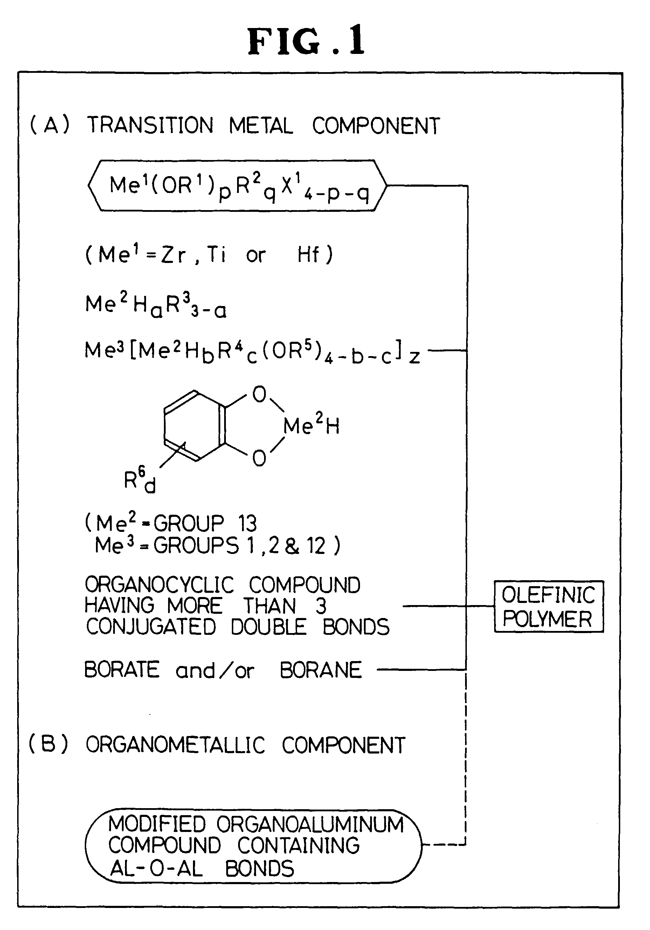

Figure 1 is a flow diagram schematically illustrating the process of preparing the inventive catalysts.

The compound or component (A) of the catalyst composition of the invention comprises one or more compounds of the formula

Me¹(OR¹)ₚR² _{q}X¹ _{4-p-q} I

where R¹ and R² each are C₁-C₂₄, preferably C₁-C₁₂, more preferably C₁-C₈ hydrocarbon groups including an alkyl group such as methyl, ethyl, propyl, isopropyl, cyclopropyl, butyl, isobutyl, tert-butyl, cyclobutyl, pentyl, isopentyl, neopentyl, cyclopentyl, hexyl, isohexyl, cyclohexyl, heptyl, octyl or the like, an alkenyl group such as vinyl, allyl or the like, an aryl group such as phenyl, tolyl, xylyl, mesityl, indenyl, naphthyl or the like, and an aralkyl group such as benzyl, trityl, phenethyl, styryl, benzhydryl, phenylbutyl, phenylpropyl, neophyl or the like.

Each of the hydrocarbon groups includes all structural isomers. In the case where the component (A) has more than two hydrocarbon groups, these groups may be the same or different.

X¹ is a halogen atom such as fluorine, iodine, chlorine and bromine. Me¹ denotes zirconium (Zr), titanium (Ti) and hafnium (Hf). Zirconium is preferred for the purpose of the invention. p and q are 0 ≤ p ≤ 4 and 0 ≤ q ≤ 4, respectively and 0 ≤ p+q ≤ 4, preferably 0 ≤ p+q ≤ 4.

The component (A) exemplarily and specifically includes tetramethyl zirconium, tetraethyl zirconium, tetrapropyl zirconium, tetra-n-butyl zirconium, tetrapentyl zirconium, tetraphenyl zirconium, tetratolyl zirconium, tetrabenzyl zirconium, tetramethoxy zirconium, tetraethoxy zirconium, tetrapropoxy zirconium, tetrabutoxy zirconium, tetraphenoxy zirconium, tetratolyloxy zirconium, tetrapentyloxy zirconium, tetrabenzyloxy zirconium, tetraallyl zirconium, tetraneophyl zirconium, trimethylmonochlorozirconium, triethylmonochlorozirconium, tripropylmonochlorozirconium, tri-n-butylmonochlorozirconium, tribenzylmonochlorozirconium, triethyldichlorozirconium, diethyldichlorozirconium, di-n-butyldichlorozirconium, dibenzyldichlorozirconium, monomethyltrichlorozirconium, monoethyltrichlorozirconium, mono-n-butyltrichlorozirconium, monobenzyltrichlorozirconium, tetrachlorozirconium, trimethoxymonochlorozirconium, dimethoxydichlorozirconium, monomethoxytrichlorozirconium, tetraethoxyzirconium, triethoxymonochlorozirconium, diethoxydichlorozirconium, monoethoxytrichlorozirconium, tetraisopropoxyzirconium, triisopropoxymonochlorozirconium, diisopropoxydichlorozirconium, monoizopropoxytrichlorozirconium, tetra-n-butoxyzirconium, tri-n-butoxymonochlorozirconium, di-n-butoxydichlorozirconium, mono-n-butoxytrichylorozirconium, tetrapentoxyzirconium, tripentoxymonochlorozirconium, dipentoxydichlorozirconium, monopentoxytrichlorozirconium, tetraphenoxyzirconium, triphenoxymonochlorozirconium, diphenoxydichlorozirconium, monophenoxytrichlorozirconium, tetratolyloxyzirconium, tritolyloxymonochlorozirconium, ditolyloxydichlorozirconium, monotolyloxytrichlorozirconium, tetrabenzyloxyzirconium, tribenzyloxymonochlorozirconium, dibenzyloxydichlorozirconium, monobenzyloxytrichlorozirconium, trimethylmonobromozirconium, triethylmonobromozirconium, tripropylmonobromozirconium, tri-n-butylmonobromozirconium, tribenzylmonobromozirconium, dimethyldibromozirconium, diethyldibromozirconium, di-n-butyldibromozirconium, dibenzyldibromozirconium, monomethyltribromozirconium, monoethyltribromozirconium, mono-n-butyltribromozirconium, monobenzyltribromozirconium, tetrabromozirconium, trimethoxymonobromozirconium, dimethoxydibromozirconium, monomethoxytribromozirconium, triethoxymonobromozirconium, diethoxydibromozirconium, monoethoxytribromozirconium, triisopropoxymonobromozirconium, diisopropoxydibromozirconium, monoisopropoxytribromozirconium, tri-n-butoxymonobromozirconium, di-n-butoxydibromozirconium, mono-n-butoxytribromozirconium, tripentoxymonobromozirconium, dipentoxydibromozirconium, monopentoxytribromozirconium, triphenoxymonobromozirconium, diphenoxydibromozirconium, monophenoxytribromozirconium, tritolyloxymonobromozirconium, ditolyloxydibromozirconium, monotolyloxytribromozirconium, tribenzyloxymonobromozirconium, dibenzyloxydibromozirconium, monobenzyloxytribromozirconium, trimethylmonoiodozirconium, triethylmonoiodozirconium, tripropylmonoiodozirconium, tri-n-butylmonoiodozirconium, tribenzylmonoiodozirconium, dimethyldiiodozirconium, diethyldiiodozirconium, di-n-butyldiiodozirconium, dibenzyldiiodozirconium, monomethyltriiodozirconium, monoethyltriiodozirconium, mono-n-butyltriiodozirconium, monobenzyltriiodozirconium, tetraiodozirconium, trimethoxymonoiodozirconium, dimethoxydiiodozirconium, monomethoxytriiodozirconium, triethyoxymonoiodozirconium, diethoxydiiodozirconium, monoethoxytriiodozirconium, triisopropoxymonoiodozirconium, diisopropoxydiiodozirconium, monoisopropoxytriiodozirconium, tri-n-butoxymonoiodozirconium, di-n-butoxytriiodozirconium, tripentoxymonoiodozirconium, dipentoxydiiodozirconium, monopentoxytriiodozirconium, triphenoxymonoiodozirconium, diphenoxydiiodozirconium, monophenoxytriiodozirconium, tritolyloxymonoiodozirconium, ditolyloxydiiodozirconium, monotolyloxytriiodozirconium, tribenzyloxymonoiodozirconium, dibenzyloxydiiodozirconium, monobenzyloxytriiodozirconium, tribenzylmonomethoxyzirconium, tribenzylmonoethoxyzirconium, tribenzylmonopropoxyzirconium, tribenzylmonobutoxyzirconium, tribenzylmonophenoxyzirconium, dibenzyldimethoxyzirconium, dibenzyldiethoxyzirconium, dibenzyldipropoxyzirconium, dibenzyldibutoxyzirconium, dibenzyldiphenoxyzirconium, monobenzyltrimethoxyzirconium, monobenzyltriethoxyzirconium, monobenzyltripropoxyzirconium, monobenzyltributoxyzirconium, monobenzyltriphenoxyzirconium, trineophylmonomethoxyzirconium, trineophylmonoethoxyzirconium, trineophylmonopropoxyzirconium, trineophylmonobutoxyzirconium, trineophylmonophenoxyzirconium, dineophyldimethoxyzirconium, dineophyldiethoxyzirconium, dineophyldipropoxyzirconium, dineophyldibutoxyzirconium, dineophyldiphenoxyzirconium, mononeophyltrimethoxyzirconium, mononeophyltriethoxyzirconium, mononeophyltripropoxyzirconium, mononeophyltributoxyzirconium, mononeophyltriphenoxyzirconium, tetramethyl titanium, tetraethyl titanium, tetrapropyl titanium, tetra-n-butyl titanium, tetrapentyl titanium, tetraphenyl titanium, tetratolyl titanium, tetrabenzyl titanium, tetramethoxy titanium, tetraethoxy titanium, tetrapropoxy titanium, tetrabutoxy titanium, tetraphenoxy titanium, tetratolyloxy titanium, tetrapentyloxy titanium, tetrabenzyloxy titanium, tetraallyl titanium, tetraneophyl titanium, trimethylmonochlorotitanium, triethylmonochlorotitanium, tripropylmonochlorotitanium, tri-n-butylmonochlorotitanium, tribenzylmonochlorotitanium, dimethyldichlorotitanium, diethyldichlorotitanium, di-n-butyldichlorotitanium, dibenzyldichlorotitanium, monomethyltrichlorotitanium, monoethyltrichlorotitanium, mono-n-butyltrichlorotitanium, monobenzyltrichlorotitanium, tetramethoxytitanium, trimethoxymonochlorotitanium, dimethoxydichlorotitanium, monomethoxytrichlorotitanium, tetraethoxytitanium, triethoxytrichlorotitanium, tetraisopropoxytitanium, triisopropoxymonochlorotitanium, diisopropoxydichlorotitanium, monosiopropoxytrichlorotitanium, tetra-n-butoxytitanium, tri-n-butoxymonochlorotitanium, di-n-butoxydichlorotitanium, mono-n-butoxytrichlorotitanium, tetrapentoxytitanium, tripentoxymonochlorotitanium, dipentoxydichlorotitanium, monopentoxytrichlorotitanium, tetraphenoxytitanium, triphenoxymonochlorotitanium, diphenoxydichlorotitanium, monophenoxytrichlorotitanium, tetratolyloxytitanium, tritolyloxymonochlorotitanium, ditolyloxydichlorotitanium, monotolyloxytrichlorotitanium, tetrabenzyloxytitanium, tribenzyloxymonochlorotitanium, dibenzyloxydichlorotitanium, monobenzyloxytrichlorotitanium, trimethymonobromotitanium, triethylmonobromotitanium, tripropylmonobromotitanium, tri-n-butylmonobromotitanium, tribenzylmonobromotitanium, dimethyldibromotitanium, diethyldibromotitanium, di-n-butyldibromotitanium, dibenzyldibromotitanium, monomethyltribromotitanium, monoethyltribromotitanium, mono-n-butyltribromotitanium, monobenzyltribromotitanium, tetrabromotitanium, trimethoxymonobromotitanium, dimethoxydibromotitanium, monomethoxytribromotitanium, triethoxymonobromotitanium, diethoxydibromotitanium, monoethoxytribromotitanium, triisopropoxymonobromotitanium, diisopropoxydibromotitanium, monoisopropoxytribromotitanium, tri-n-butoxymonobromotitanium, di-n-butoxydibromotitanium, mono-n-butoxytribromotitanium, tripentodymonobromotitanium, dipentoxydibromotitanium, monopentoxytribromotitanium, triphenoxymonobromotitanium, diphenoxydibromotitanium, monophenoxytribromotitanium, tritolyloxymonobromotitanium, ditolyloxydibromotitanium, monotolyloxytribromotitanium, tribenzyloxymonobromotitanium, dibenzyloxydibromotitanium, monobenzyloxytribromotitanium, trimethylmonoiodotitanium, triethylmonoiodotitanium, tripropylmonoiodotitanium, tri-n-butylmonoiodotitanium, tribenzylmonoiodotitanium, dimethyldiiodotitanium, diethyldiiodotitanium, di-n-butyldiiodotitanium, dibenzyldiiodotitanium, monomethyltriiodotitanium, monoethyltriiodotitanium, mono-n-butyltriiodotitanium, monobenzyltriiodotitanium, tetraiodotitanium, trimethoxymonoiodotitanium, dimethoxydiiodotitanium, monomethoxytriiodotitanium, triethoxymonoiodotitanium, diethoxydiiodotitanium, monoethoxytriiodotitanium, triisopropoxymonoiodotitanium, diisopropoxydiiodotitanium, monoisopropoxytriiodotitanium, tri-n-butoxymonoiodotitanium, di-n-butoxydiiodotitanium, mono-n-butoxytriiodotitanium, tripentoxymonoiodotitanium, dipentoxydiiodotitanium, monopentoxytriiodotitanium, triphenoxymonoiodotitanium, diphenoxydiiodotitanium, monophenoxytriiodotitanium, tritolyloxymonoiodotitanium, ditolyloxydiiodotitanium, monotolyloxytriiodotitanium, tribenzyloxymonoiodotitanium, dibenzyloxydiiodotitanium, monobenzyloxytriiodotitanium, tribenzylmonomethoxytitanium, tribenzylmonoethoxytitanium, tribenzylmonopropoxytitanium, tribenzylmonobutoxytitanium, tribenzylmonophenoxytitanium, dibenzyldimethoxytitanium, dibenzyldiethoxytitanium, dibenzyldidipropoxytitanium, dibenzyldidibutoxytitanium, dibenzyldidiphenoxytitanium, monobenzyltrimethoxytitanium, monobenzyltriethoxytitanium, monobenzyltripropoxytitanium, monobenzyltributoxytitanium, monobenzyltriphenoxytitanium, trineophylmonomethoxytitanium, trineophylmonoethoxytitanium, trineophylmonopropoxytitanium, trineophylmonobutoxytitanium, trineophylmonophenoxytitanium, dineophyldimethoxytitanium, dineophyldiethoxytitanium, dineophyldipropoxytitanium, dineophyldibutoxytitanium, dineophyldiphenoxytitanium, dineophyltrimethoxytitanium, mononeophyltriethoxytitanium, mononeophyltripropoxyribtoxytitanium, mononeophyltriphenoxytitanium, tetramethyl hafnium, tetraethyl hafnium, tetrapropyl hafnium, tetra-n-butyl hafnium, tetrapentyl hafnium, tetraphenyl hafnium, tetratolyl hafnium, tetrabenzyl hafnium, tetramethoxy hafnium, tetraethoxy hafnium, tetrapropoxy hafnium, tetrabutoxy hafnium, tetraphenoxy hafnium, tetratolyloxy hafnium, tetrapentyloxy hafnium, tetrabenzyloxy hafnium, tetraallyl hafnium, tetraneophyl hafnium, trimethylmonochlorohafnium, triethylmonochlorohafnium, tripropylmonochloro hafnium, tri-n-butylmonochloro hafnium, tribenzylmonochloro hafnium, dimethyldichlorohafnium, diethyldichlorohafnium, di-n-butyldichlorohafnium, dibenzyldichlorohafnium, monomethyltrichlorohafnium, monoethyltrichlorohafnium, mono-n-butyltrichlorohafnium, monobenzyltrichlorohafnium, tetramethoxyhafnium, trimethoxymonochlorohafnium, dimethoxydichlorohafnium, monomethoxytrichlorohafnium, tetraethoxyhafnium, triethoxymonochlorohafnium, diethoxydichlorohafnium, monoethoxytrichlorohafnium, tetraisopropoxyhafnium, triisopropoxymonochlorohafnium, diisopropoxydichlorohafnium, monoisopropoxytrichlorohafnium, tetra-n-butoxyhafnium, tri-n-butoxymonochlorohafnium, di-n-butoxydichlorohafnium, mono-n-butoxytrichlorohafnium, tetrapentoxyhafnium, tripentoxymonochlorohafnium, dipentoxydichlorohafnium, monopentoxytrichlorohafnium, tetraphenoxyhafnium, triphenoxymonochlorohafnium, diphenoxydichlorohafnium, monophenoxytrichlorohafnium, tetratolyloxyhafnium, tritolyloxymonochlorohafnium, ditolyloxydichlorohafnium, monotolyloxytrichlorohafnium, tetrabenzyloxyhafnium, tribenzyloxymonochlorohafnium, dibenzyloxydichlorohafnium, monobenzyloxytrichlorohafnium, trimethylmonobromohafnium, triethylmonobromohafnium, tripropylmonobromohafnium, tri-n-butylmonobromohafnium, tribenzylmonobromohafnium, dimethyldibromohafnium, diethyldibromohafnium, di-n-butyldibromohafnium, dibenzyldibromohafnium, monoethyltribromohafnium, monoethyltribromohafnium, mono-n-butyltribromohafnium, monobenzyltribromohafnium, tetrabromohafnium, trimethoxymonobromohafnium, dimethoxydibromohafnium, monomethoxytribromohafnium, triethoxymonobromohafnium, diethoxydibromohafnium, monoethoxytribromohafnium, triisopropoxymonobromohafnium, diisopropoxydibromohafnium, monoisopropoxytribromohafnium, tri-n-butoxymonobromohafnium, di-n-butoxydibromohafnium, mono-n-butoxytribromohafnium, tripentoxymonobromohafnium, dipentoxydibromohafnium, monopentoxytribromohafnium, triphenoxymonobromohafnium, diphenoxydibromohafnium, monophenoxytribromohafnium, tritolyloxymonobromohafnium, ditolyloxydibromohafnium, monotolyloxytribromohafnium, tribenzyloxybromohafnium, dibenzyloxydibromohafnium, monobenzyloxytribromohafnium, trimethylmonoiodohafnium, triethylmonoiodohafnium, tripropylmonoiodohafnium, tri-n-butylmonoiodohafnium, tribenzylmonoiodohafnium, dimethyldiiodohafnium, diethyldiiodohafnium, di-n-butyldiiodohafnium, dibenzyldiiodohafnium, monomethyltriiodohafnium, monoethyltriiodohafnium, mono-n-butyltriiodohafnium, monobenzyltriiodohafnium, tetraiodohafnium, trimethoxymonoiodohafnium, dimethoxydiiodohafnium, monomethoxytriiodohafnium, triethoxymonoiodohafnium, diethoxydiiodohafnium, monoethoxytriiodohafnium, triisopropoxymonoiodohafnium, diisopropoxydiiodohafnium, monoisopropoxytriiodohafnium, tri-n-butoxymonoiodohafnium, di-n-butoxydiiodohafnium, mono-n-butoxytriiodohafnium, tripentoxymonoiodohafnium, dipentoxydiiodohafnium, monopentoxytriiodohafnium, triphenoxymonoiodohafnium, diphenoxydiiodohafnium, monophenoxytriiodohafnium, tritolyloxymonoiodohafnium, ditolyloxydiiodohafnium, monotolyloxytriiodohafnium, tribenzyloxymonoiodohafnium, dibenzyloxydiiodohafnium, monobenzyloxytriiodohafnium, tribenzylmonomethoxyhafnium, tribenzylmonoethoxyhafnium, tribenzylmonopropoxyhafnium, tribenzylmonobutoxyhafnium, tribenzylmonophenoxyhafnium, dibenzyldimethoxyhafnium, dibenzyldiethoxyhafnium, dibenzyldipropoxyhafnium, dibenzyldibutoxyhafnium, dibenzyldiphenoxyhafnium, monobenzyltrimethoxyhafnium, monobenzyltriethoxyhafnium, monobenzyltripropoxyhafnium, monobenzyltributoxyhafnium, monobenzyltriphenoxyhafnium, trineophylmonomethoxyhafnium, trineophylmonoethoxyhafnium, trineophylmonopropoxyhafnium, trineophylmonobutoxyhafnium, trineophylmonophenoxyhafnium, dineophyldimethoxyhafnium, dineophyldiethoxyhafnium, dineophyldipropoxyhafnium, dineophyldibutoxyhafnium, dineophyldiphenoxyhafnium, mononeophyltrimethoxyhafnium, mononeophyltriethoxyhafnium, mononeophyltripropoxyhafnium, mononeophyltributoxyhafnium, mononeophyltriphenoxyhafnium.

Preferred are tetramethyl zirconium, tetraethyl zirconium, tetrabenzyl zirconium, tetrapropoxy zirconium, tripropoxymonochloro zirconium, tetrabutoxy zirconium, tetrachloro zirconium, tetrabutoxy titanium, tetrabutoxy hafnium and more preferred are tetraalkoxy zirconium such as tetrapropoxy zirconium and tetrabutoxy zirconium.

The component (B) of the inventive composition is at least one of the three metal hydride compounds of the formulae

(Ba) Me²HaR³ ₃₋ₐ II

(Bh) Me³[Me²HbR⁴(OR⁵)_{4-b-c}]_{Z} III

and 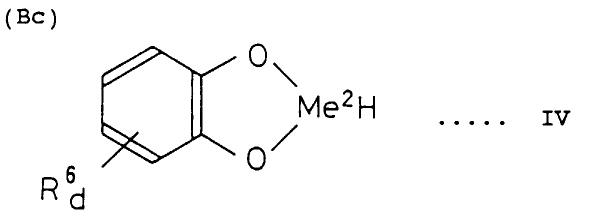 where in each of the above formulae (Ba)-(Bc) Me² is an element of Group 13 in the Periodic Table such as boron and aluminum, Me³ is an element of Group 1 such as lithium, sodium and potassium, an element of Group 2 such as magnesium, calcium and barium, or an element of Group 12 such as zinc. R³, R⁴, R⁵ and R⁶ each are C₁-C₂₄, preferably C₁-C₆ hydrocarbon groups including each alkyl group such as methyl, ethyl, propyl, isopropyl, cyclopropyl, butyl, isobutyl, tert-butyl, pentyl, isopentyl, neopentyl, cyclopentyl, hexyl, isohexyl, cyclohexyl, heptyl, octyl, decyl and dodecyl; each alkenyl group such as vinyl and allyl; each aryl group such as phenyl, tolyl, xylyl, mesityl, indenyl and naphthyl; and each aralkyl group such as benzyl, trityl, phenethyl, styryl, benzhydryl, phenylbutyl, phenylpropyl and neophyl. In the case where there are more than two hydrocarbon groups in the molecule, such groups may be identical or different.

The symbol Z is a valence of Me³. a, b and c are 1 ≤ a ≤ 3, 1 ≤ b ≤ 4 and 0 ≤ c ≤ 3, respectively, and 1 ≤ b+c ≤ 4. d is 0 ≤ d ≤ 4, preferably 0 ≤ d ≤ 2, more preferably 0 ≤ d ≤ 1, most preferably d = 0. a, b, c and d each are normally an integer.

In the metal halide compound (b) where Me² is boron, Me³ is preferably lithium, sodium or zinc, and where M² is aluminum, M³ is preferably lithium, sodium or potassium. In the metal halide compound (c), there is no restriction upon the bond position of the hydrocarbon groups R⁶. However in the case of d=2, the group R⁶ is usually bonded at position-4 and position-5, position-4 and position-6, or position-5 and position-6, and in the case of d=1, at position-4 and position-5.

Specific examples of the component (B) include aluminum hydride, dimethylaluminum hydride, diethylaluminum hydride, dipropylaluminum hydride, diisopropylaluminum hydride, dibutylaluminum hydride, diisobutylaluminum hydride, dihexylaluminum hydride, dicyclohexylaluminum hydride, lithiumaluminum hydride, sodiumaluminum hydride, lithiumaluminumtrimethoxy hydride, sodiumaluminumtrimethoxy hydride, lithiumaluminumtriethoxy hydride, sodiumaluminumtriethoxy hydride, lithiumaluminum-tri-tert-butoxy hydride, sodiumaluminum-tri-tert-butoxy hydride, borane, diborane, 2,3-dimethyl-2-butylborane, bis(3-methyl-2-butyl)borane, dicyclohexyl borane, diisopinocamphenyl borane, 9-borabicyclo[3,3,1]nonane, catechol borane, lithiumborohydride, sodiumborohydride, zincborohydride, magnesiumborohydride, calciumborohydride, bariumborohydride, lithiumtriethylborohydride, lithiumtriisobutylborohydride, potassiumtriisobutylborohydride, sodiumcyanoborohydride, potassiumcyanoborohydride, catecholborane(1,3,2-benzodioxaborarol), 4-methyl-1,3,2-benzodioxaborarol, 5-methyl-1,3,2-benzodioxaborarol, 4,5-dimethyl-1,3,2-benzodioxaborarol, 4,6-dimethyl-1,3,2-benzodioxaborarol, 4,7-dimethyl-1,3,2-benzodioxaborarol, 4-ethyl-1,3,2-benzodioxaborarol, 5-ethyl-1,3,2-benzodioxaborarol, 4,5-diethyl-1,3,2-benzodioxaborarol, 4,6-diethyl-1,3,2-benzodioxaborarol, 4,7-diethyl-1,3,2-benzodioxaborarol, 4-propyl-1,3,2-benzodioxaborarol, 5-propyl-1,3,2-benzodioxaborarol, 4,5-dipropyl-1,3,2-benzodioxaborarol, 4,6-dipropyl-1,3,2-benzodioxaborarol, 4,7-dipropyl-1,3,2-benzodioxaborarol, 4,5,6-trimethyl-1,3,2-benzodioxaborarol, 4,5,7-trimethyl-1,3,2-benzodioxaborarol, 4,5,6,7-tetramethyl-1,3,2-benzodioxaborarol, preferably aluminum hydride, dimethylaluminum hydride, diethylaluminum hydride, diisobutylaluminum hydride, lithiumaluminum hydride, lithiumaluminumtrimethoxy hydride, sodiumborohydride, lithiumtriisobutylborohydride and potassium triisobutylborohydride.

Two or more of the above compounds may be used in combination, preferred such combinations being diisobutylaluminum hydride and sodiumborohydride, diisobutylaluminum hydride and lithiumaluminum hydride, lithiumaluminumtriethoxy hydride, sodiumborohydride or lithiumaluminumtriethoxy hydride and lithiumaluminum hydride and the other.

The component (C) of the inventive catalyst composition is an organocyclic compound having more than two conjugated double-bonds such as a cyclic hydrocarbon compound having one or more rings having more than two, preferably two to four, more preferably two to three conjugated double-bonds and a total carbon number of 4-24, preferably 4-12; a cyclic hydrocarbon compound similar to the aforesaid hydrocarbon compound which is partially substituted by one to six hydrocarbon groups, typically C₁-C₁₂ alkyl or aralkyl groups; an organosilicone compound having more than two, preferably two to four, more preferably two to three conjugated double-bonds and a total carbon number of 4-24, preferably 4-12; an organosilicone compound similar to said organosilicone compound which is partially substituted by one to six hydrocabon groups; and alkali metal salts (sodium and lithium salts) of each of the aforesaid compounds. Particularly preferred are such organocyclic compounds having a cyclopentadiene molecular structure as are represented by the formula 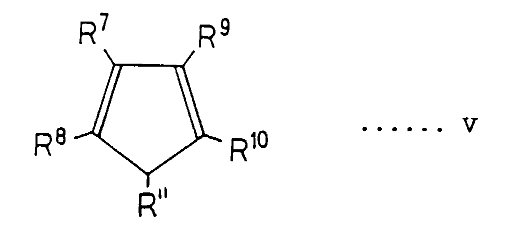 where R⁷, R⁸, R⁹, R¹⁰ and R" each are hydrogen or a C₁-C₁₀ hydrocarbon group, any two of these hydrocarbon groups jointly forming a conjugated double-bond-containing ring which is usually 6-8 membered. The C₁-C₁₀ hydrocarbon groups include each alkyl group such as methyl, ethyl, propyl, isopropyl, butyl, tert-butyl, hexyl and octyl; an aryl group such as phenyl; an alkoxy group such as methoxy, ethoxy and propoxy; an aryloxy group such as phenoxy; an aralkyl group such as benzyl.

Specific compounds of the formula V exemplarily include cyclopentadiene, indene, azulene and their alkyl, aryl, aralkyl, alkoxy and aryloxy derivatives, as well as two or more of these compounds bonded through alkylene groups of usually 2-8, preferably 2-3 carbon atoms.

The organosilicone compound having a cyclic hydrocarbon group may be represented by the formula

(Cp)_{L}SiR¹² _{4-L} VI

where Cp is a cyclic hydrocarbon group such as cyclopentadienyl, substituted-cyclopentadienyl, indenyl and substituted-indenyl, R¹² is hydrogen or a C₁-C₂₄, preferably C₁-C₁₂ hydrocarbon group including an alkyl group such as methyl, ethyl, propyl, isopropyl, butyl, tert-butyl, hexyl and octyl; an alkoxy group such as methoxy, ethoxy, propoxy and butoxy; an aryl group such as phenyl; an aryloxy group such as phenoxy; and an aralkyl group such as benzyl.
and L is 1 ≤ L ≤ 4, preferably 1 ≤ L ≤ 3.

Eligible for use as the component (C) are cyclopolyene or substituted-cyclopolyene of 7-24 carbon atoms such as cyclopentadiene, methylcyclopentadiene, ethylcyclopentadiene, propycyclopentadiene, butylcyclopentadiene, tert-butylcyclopentadiene, hexylcyclopentadiene, octylcyclopentadiene, 1,2-dimethylcyclopentadiene, 1,3-dimethylcyclopentadiene, 1,2,4-trimethylcyclopentadiene, 1,2,3,4-tetramethylcyclopentadiene, pentamethylcyclopentadiene, indene, 4-methyl-1-indene, 4,7-dimethylindene, 4,5,6,7-tetrahydroindene, cycloheptatriene, methylcycloheptatriene, cyclooctatetraene, methylcyclooctatetraene, azulene, methyl azulene, ethyl azulene, fluorene and methylfluorene; monocyclopentadienylsilane, biscyclopentadienylsilane, triscyclopentadienylsilane, tetrakiscyclopentadienylsilane, monocyclopentadienylmonomethylsilane, monocyclopentadienylmonoethylsilane, monocyclopentadienyldimethylsilane, monocyclopentadienyldiethylsilane, monocyclopentadienyltrimethylsilane, monocyclopentadienyltriethylsilane, monocyclopentadienylmonomethoxysilane, monocyclopentadienylmonoethoxysilane, monocyclopentadienylmonophenoxysilane, monocyclopentadienylbiscyclopentadienylmonomethylsilane, biscyclopentadienylmonoethylsilane, biscyclopentadienyldimethylsilane, biscyclopentadienyldiethylsilane, biscyclopentadienylmethylethylsilane, biscyclopentadienyldipropylsilane, biscyclopentadienylethylpropylsilane, biscyclopentadienyldiphenylsilane, biscyclopentadienylphenylmethylsilane, biscyclopentadienylmonomethoxysilane, biscyclopentadienylmonoethoxysilane, triscyclopentadienylmonomethylsilane, triscyclopentadienylmonoethylsilane, triscyclopentadienylmonomethoxysilane, triscyclopentadienylmonoethoxysilane, 3-methylcyclopentadienylsilane, bis-3-methylcyclopentadienylsilane, 3-methylcyclopentadienylsilane, 1,2-dimethylcyclopentadienylsilane, 1,3-dimethylcyclopentadienylsilane, 1,2,4-trimethylcyclopentadienylsilane, 1,2,3,4-tetramethylcyclopentadienylsilane, pentamethylcyclopentadienylsilane, monoindenylsilane, bisindenylsilane, trisindenylsilane, tetrakisindenylsilane, monoindenylmonomethylsilane, monoindenylmonoethylsilane, monoindenyldimethylsilane, monoindenyldiethylsilane, monoindenyltrimethylsilane, monoindenyltriethylsilane, monoindenylmonomethoxysilane, monoindenylmonoethoxysilane, monoindenylmonophenoxysilane, bisindenylmonomethylsilane, bisindenylmonoethylsilane, bisindenyldimethylsilane, bisindenyldiethylsilane, bisindenylmethylethylsilane, bisindenyldipropylsilane, bisindenylethylpropylsilane, bisindenyldiphenylsilane, bisindenylphenylmethylsilane, bisindenylmonomethoxysilane, bisindenylmonoethoxysilane, trisindenylmonomethylsilane, trisindenylmonoethylsilane, trisindenylmonomethoxysilane, trisindenylmonoethoxysilane, 3-methylindenylsilane, bis-3-methylindenylsilane, 3-methylindenylmethylsilane, 1,2-dimethylindenylsilane, 1,3-dimethylindenylsilane, 1,2,4-trimethylindenylsilane, 1,2,3,4-tetramethylindenylsilane, or pentamethylindenylsilane.

The component (C) further include, as aforesaid, bisindenylethane, bis(4,5,6,7-tetrahydro-1-indenyl)ethane, 1,3-propanedinylbisindene, 1,3-propanedinylbis(4,5,6,7-tetrahydro)indene, propylenebis(1-indene), isopropyl(1-indenyl)cyclopentadiene, diphenylmethylene(9-fluorenyl)cyclopentadiene, or isopropylcyclopentadienyl-1-fluorene.

The component (D) of the inventive composition includes borane of the first class which is represented by the formula

R¹³3B VII

where R¹³ is an aryl group such as phenyl and tolyl of C₆-C₂₀, preferably C₆-C₁₂, an aralkyl group such as benzyl, a haloaryl group such as fluorophenyl, difluorophenyl, trifluorophenyl and pentafluorophenyl, and a haloaralkyl group such as pentafluorobenzyl. Specific examples include triphenylborane, tri(o-tolyl)borane, tri(p-tolyl)borane, tri(m-tolyl)borane, tri(o-fluorophenyl)borane, tri(p-fluorophenyl)borane, tri(m-fluorophenyl)borane, tri(3,5-difluorophenyl)borane, tri(pentafluorophenyl)borane, preferably tri(o-fluorophenyl)borane, tri(p-fluorophenyl)borane, tri(m-fluorophenyl)borane, tri(3,5-difluorophenyl)borane, tri(pentafluorophenyl)borane and more preferably tri(pentafluorophenyl)borane.

Borane of the second class includes higher hydrogenated boron complexes or a polyboron compound derived from pyrolysis of diborane and having more than four, usually four to twelve boron atoms, such as tetraborane and decaborane.

Borane of the third class includes a carborane such as 7,8-dicarbaundecaborane, 2,7-dicarbaundecaborane, undecahydride-7,8-dimethyl-7,8-dicarbaundecaborane, dodecahydride-11,methyl-2,7-dicarbaundecaborane, 4-carbanonaborane, 1,3-dicarbanonaborane, 6,9-dicarbadecaborane and dodecahydride-1-methyl-1,3-dicarbanonaborane.

Borate used as the component (D) is an ate-complex containing a boron atom. The first class of such borate is a higher hydrogenated boron complex; i.e. a diborane and tetrahydroborate derivative, such as tributylammoniumnonaborate, tributylammoniumdecaborate, tributylammoniumundecaborate, tributylammoniumdodecaborate, dimethylaniliniumnonaborate, dimethylaniliniumdecaborate, dimethylaniliniumundecaborate, dimethylaniliniumdodecaborate, triphenylphosphoniumnonaborate, triphenylphosphoniumdecaborate, triphenylphosphoniumundecaborate, triphenylphosphoniumdodecaborate, tritylnonaborate, trityldecaborate, tritylundecaborate, trityldodecaborate, ferroceniumnonaborate, ferroceniumdecaborate, ferroceniumundecaborate, ferroceniumdodecaborate, tropyliumnonaborate, tropyliumdecaborate, tropyliumundecaborate and tropyliumdodecaborate.

Borate of the second class is represented by the formula

[L¹-H]⁺[BR¹⁴R¹⁵X²X³]⁻ VIII

where L¹ is a neutral Lewis base, H is a hydrogen atom, [L¹-H] is Brφnsted acid such as ammonium, anilinium and phosphonium. The ammonium here designates trialkyl-substituted ammonium such as trimethylammonium, triethylammonium, tripropylammonium, tributylammonium and tri(n-butyl)ammonium; and dialkylammonium such as di(n-propyl)ammonium and dicyclohexylammonium.

The anilinium includes N,N-dialkylanilinium such as N,N-dimethylanilinium, N,N-diethylanilinium and N,N-2,4,6-pentamethylanilinium.

The phosphonium includes triarylphosphonium or trialkylphosphonium such as triphenylphosphonium, tributylphosphonium, tri(methylphenyl)phosphonium and tri(dimethylphenyl)phosphonium.

R¹⁴ and R¹⁵ in the formula VIII each are an aromatic hydrocarbon group or substituted-aromatic hydrocarbon group or substituted-aromatic hydrocarbon group of C₆-C₂₀, preferably C₆-C₁₆ which may be cross-linked to one another. The substituted aromatic hydrocarbon group is a C₁-C₄ hydrocarbon group, typically an alkyl group such as methyl, ethyl, propyl and isopropyl, and a halogen such as fluorine, chlorine, bromine and iodine.

X² and X³ in the formula XIII each are hydrogen, halogen, C₁-C₂₀ hydrocarbon groups (including an alkyl group such as methyl, ethyl, propyl, isopropyl, cyclopropyl, butyl, isobutyl, tert-butyl, cyclobutyl, pentyl, isopentyl, neopentyl, cyclopentyl, hexyl, isohexyl, fcyclohexyl, heptyl and octyl; an alkenyl group such as vinyl and allyl; an aryl group such as phenyl, tolyl, xylyl, mesityl, indenyl and naphthyl; an aralkyl group such as benzyl, trityl, phenethyl, styryl, benzhydryl, phenylbutyl, phenylpropyl and neophyl) and halogen-substituted hydrocarbon groups derived from the just mentioned hydrocarbon groups (substituted-halogen being fluorine, chlorine, bromine and iodine).

Borate of the second class includes trialkyl-substituted ammonium salts such as tributylammoniumtetra(p-tolyl)borate, tributylammoniumtetra(m-tolyl)borate, tributylammoniumtetra(o-fluorophenyl)borate, tributylammoniumtetra(p-fluorophenyl)borate, tributylammoniumtetra(m-fluorophenyl)borate, tributylammoniumtetra(3,5-difluorophenyl)borate, dimethylaniliniumtetra(o-tolyl)borate, dimethylaniliniumtetra(p-tolyl)borate, dimethylaniliniumtetra(m-tolyl)borate, dimethylaniliniumtetra(o-fluorophenyl)borate, dimethylaniliniumtetra(p-fluorophenyl)borate, dimethylaniliniumtetra(m-fluorophenyl)borate, dimethylaniliniumtetra(3,5-difluorophenyl)borate, dimethylaniliniumtetra(pentafluorophenyl)borate, triphenylphosphoniumtetraphenylborate, triphenylphosphoniumtetra(o-tolyl)borate, triphenylphosphoniumtetra(p-tolyl)borate, triphenylphosphoniumtetra(m-tolyl)borate, triphenylphosphoniumtetra(o-fluorophenyl)borate, triphenylphosphoniumtetra(p-fluorophenyl)borate, triphenylphosphoniumtetra(m-fluorophenyl)borate, triphenylphosphoniumtetra(3,5-difluorophenyl)borate, triphenylphosphoniumtetra(pentafluorophenyl)borate, triethylammoniumtetra(o-fluorophenyl)borate, triethylammoniumtetra(pentafluorophenyl)borate, triethylammoniumtetra(phenyl)borate, tripropylammoniumtetraphenylborate, tri(n-butyl)ammoniumtetraphenylborate, trimethylammoniumtetra(p-tolyl)borate, trimethylammoniumtetra(o-tolyl)borate, tripropylammoniumtetra(o,p-dimethylphenyl)borate, tributylammoniumtetra(p-trifluoromethylphenyl)borate, tributylammoniumtetra(pentafluorophenyl)borate and tri(n-butyl)ammoniumtetra(o-tolyl)borate; N,N-dialkylanilinium salts such as N,N-dimethylaniliniumtetra(phenyl)borate, N,N-diethylaniliniumtetra(phenyl)borate and N,N-2,4,6-pentamethylaniliniumtetra(phenyl)borate; and dialkylammonium salts such as di(1-propyl)ammoniumtetra(pentafluorophenyl)borate and dicyclohexylammoniumtetraphenylborate; preferably tributylammoniumtetra(o-fluorophenyl)borate, tributylammoniumtetra(p--fluorophenyl)borate, tributylammoniumtetra(m--fluorophenyl)borate, tributylammoniumtetra(3,5-difluorophenyl)borate, tributylammoniumtetra(pentafluorophenyl)borate, dimethylaniliniumtetra(o-fluorophenyl)borate, dimethylaniliniumtetra(p-fluorophenyl)borate, dimethylaniliniumtetra(m-fluorophenyl)borate, dimethylaniliniumtetra(3,5-difluorophenyl)borate, dimethylaniliniumtetra(pentafluorophenyl)borate and more preferably tributylammoniumtetra(pentafluorophenyl)borate and dimethylaniliniumtetra(pentafluorophenyl)borate.

Borate of the third class is represented by the formula

[L²-H][CX⁴ ₑ(BX⁵)_{f}X⁶ _{g}]^{h-} IX

where [L²-H] is hydrogen ion, ammonium cation, substituted-ammonium cation and phosphonium or phosphonium-substituted group. The substituting group for ammonium cation and phosphonium group is a C₁-C₂₀, preferably C₁-C₈ hydrocarbon group (including an alkyl group such as methyl, ethyl, propyl, isopropyl, cyclopropyl, butyl, isobutyl, tert-butyl, cyclobutyl, pentyl, isopentyl, neopentyl, cyclopentyl, hexyl, isohexyl, cyclohexyl, heptyl and octyl; an alkenyl group such as vinyl and allyl; an aryl group such as phenyl, tolyl, xylyl, mesityl, indenyl and naphthyl; and an aralkyl group such as benzyl, trityl, phenethyl, styryl, benzhydryl, phenylbutyl, phenylpropyl and neophyl) or a halogen-substituted hydrocarbon group derived from the just mentioned hydrocarbon groups, halogen-substituting group being substituted by less than three hydrogen atoms in ammonium cation or phosphonium. The substituted-ammonium cation includes each trialkyl-substituted ammonium cation such as trimethylammonium, triethylammonium, tripropylammonium, tributylammonium and tri(n-butyl)ammonium; and dilkylammonium, cation such as di(n-propyl)ammonium and dicyclohexylammonium.

The substituted-phosphonium group includes triarylphosphonium and trialkylphosphonium such as triphenylphosphonium, tributylphosphonium, tri(methylphenyl)phosphonium and tri(dimethylphenyl)phsphonium.

X⁴, X⁵ and X⁶ in the formula IX each are hydrogen atom, halogen atom and C₁-C₂₀, preferably C₁-C₁₂ hydrocarbon group (including an alkyl group such as methyl, ethyl, propyl, isopropyl, cyclopropyl, butyl, isobutyl, tert-butyl, cyclobutyl, pentyl, isopentyl, neopentyl, cyclopentyl, hexyl, isohexyl, cyclohexyl, heptyl and octyl; an alkenyl group such as vinyl and allyl; an aryl group such as phenyl, tolyl, xylyl, mesityl, indenyl and naphthyl; and an aralkyl group such as benzyl, trityl, phenethyl, styryl, benzhydryl, phenylbutyl, phenylpropyl and neophyl), a halogen-substituted hydrocarbon group derived from the just mentioned hydrocarbon groups, or an organo-metalloid of Groups IV-A in the Periodic Table having in its organo portion a C₁-C₂₀ preferably C₁-C₁₂ hydrocarbon substituting group. The symbols e and g each are an integer greater than 0; h is an integer greater than 1; e+g+h is an even-number integer usually of from 2 to 8; and f is an integer usually of from 5 to 22.

Specific examples of the third class borate include monohydrocarbyl-substituted ammonium salts such as tributylammonium-1carbaundecaborate, tributylammonium-1carbadecaborate, tributylammonium-6carbaundecaborate, tributylammonium7carbaundecaborate, tributylammonium-7,8dicarbaundecaborate, tributylammonium-2,9-dicarbaundecaborate, methylammonium-1-carbadodecaborate, ethylammonium-1-carbadodecaborate, propylammonium-1-carbadodecaborate, isorpopylammonium-1-carbadodecaborate, (n-butyl)ammonium-1-carbadodecaborate, anilinium-1-carbadodecaborate and (p-tolyl)ammonium-1-carbadodecaborate; dihydrocarbyl-substituted ammonium salts such as dimethylanilinium-1-carbaundecaborate, dimethylanilinium-1-carbadodecaborate, dimethylanilinium-1-carbadecaborate, dimethylanilinium-6-carbaundecaborate, dimethylanilinium-7-carbaundecaborate, dimethylanilinium-7,8-dicarbaundecaborate, dimethylanilinium-2,9-dicarbaundecaborate, dimethylammonium-1-carbaundecaborate, diethylammonium-1-carbaundecaborate, dipropylammonium-1-carbadodecaborate, diisopropylammonium-1-carbadodecaborate, di(n-butyl)ammonium-1-carbadodecaborate, diphenylammonium-1-carbadodecaborate and di(p-tolyl)ammonium-1-carbadodecaborate; and trihydrocarbyl-substituted ammonium salts such as trimethylammonium-1-carbadodecaborate, triethylammonium-1-carbadodecaborate, tripropylammonium-1-carbadodecaborate, tri(n-butyl)ammonium-1-carbadodecaborate, triphenylammonium-1-carbadodecaborate, tri(p-tolyl)ammonium-1-carbadodecaborate, N,N-dimethylanilinium-1-carbadodecaborate and N,N-diethylanilinium-1-carbadodecaborate.

Borate of the fourth class is represented by the formula 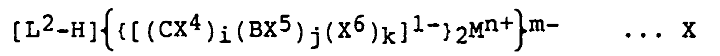 wherein [L²-H], X⁴, X⁵ and X⁶ each are the same as defined in formula IX; M is Cr, Mn, Fe, Co, Ni and like transition metal; i and k each are the same or different integer greater than 0; l is an integer greater than 2; i+k+l is an even-number integer usually of from 4 to 8; j is an integer of from 6 to 12; n is an integer corresponding to 21-n=m; and m is an integer greater than 1.

Borate of the fourth class includes
tributylammoniumbis(nonahydride-1,3-dicarbaunaborate)cobaltate (III),
tributylammoniumbis(undecahydride-7,8-dicarbaunaborate)ferrate (III),
tributylammoniumbis(undecahydride-7,8-dicarbaundecaborate)cobaltate (III),
tributylammoniumbis(undecahydride-7,8-dicarbaunaborate)nickelate (III),
tributylammoniumbis(dodecahydridedicarbadodecaborate)cobaltate (III),
tributylammoniumbis(undecahydride-7-carbaundecaborate)chromate (III),
tributylammoniumbis(undecahydride-7-carbaundecaborate)magnate (IV),
tributylammoniumbis(undecahydride-7-carbaundecaborate)cobaltate (III),
tributylammoniumbis(undecahydride-7-carbaundecaborate)nickelate (IV),
dimethylaniliniumbis(nonahydride-1,3-dicarbaunaborate)cobaltate (III),
dimethylaniliniumbis(undecahydride-7,8-dicarbaundecaborate)ferrate (III),
dimethylaniliniumbis(undecahydride-7,8-dicarbaundecaborate)cobaltate (III),
dimethylaniliniumbis(undecahydride-7,8-dicarbaundecaborate) nickelate (III),
dimethylaniliniumbis(dodecahydridedicarbadodecaborate)cobaltate (III),
dimethylaniliniumbis(undecahydride-7-carbaundecaborate)chromate (III),
dimethylaniliniumbis(undecahydride-7-carbaundecaborate)manganate (IV),
dimethylaniliniumbis(undecahydride-7-carbaundecaborate)cobaltate (III),
dimethylaniliniumbis(undecahydride-7-carbaundecaborate)nickelate (IV),
triphenylphosphoniumbis(nonahydride-1,3-dicarbaunaborate)cobaltate (III),
triphenylphosphoniumbis(undecahydride-7,8-dicarbaundecaborate)ferrate (III),
triphenylphosphoniumbis(undecahydride-7,8-dicarbaundecaborate)cobaltate (III),
triphenylphosphoniumbis(undecahydride-7,8-dicarbaundecaborate)nickelate (III),
triphenylphosphoniumbis(dodecahydridedicarbadodecaborate)cobaltate (III),
triphenylphosphoniumbis(undecahydride-7-carbaundecaborate)chromate (III),
triphenylphosphoniumbis(undecahydride-7-carbaundecaborate)manganate (IV),
triphenylphosphoniumbis(undecahydride-7-carbaundecaborate)cobaltate (III), or
triphenylphosphoniumbis(undecahydride-7-carbaundecaborate)nickelate (IV).

Borate of the fifth class is represented by the formula

[L³]⁺[BR¹³R¹⁴X²X³]⁻ XI

where L³ is a carbocation; and R¹³, R¹⁴, X² and X³ each are the same as defined in formula VIII. The carbocation includes alkyl cation such as methyl cation, ethyl cation, propyl cation, isopropyl cation, butyl cation, isobutyl cation, tert-butyl cation, pentyl cation and neopentyl cation; cycloalkyl cation such as tropylium cation; benzyl cation, or trityl cation.

The fifth class borate exemplarily and specifically includes trityltetraphenylborate, trityltetra(o-tolyl)borate, trityltritetra(p-tolyl)borate, trityltritetra(m-tolyl)borate, trityltritetra(o-fluorophenyl)borate, trityltritetra(p-fluorophenyl)borate, trityltritetra(m-fluorophenyl)borate, trityltritetra(3,5-difluorophenyl)borate, trityltritetra(pentafluorophenyl)borate, tropyliumtetraphenylborate, tropyliumtetra(o-tolyl)borate, tropyliumtetra((p-tolyl)borate, tropyliumtetra(m-tolyl)borate, tropyliumtetra(o-fluorophenyl)borate, tropyliumtetra(p-fluorophenyl)borate, tropyliumtetra(m-fluorophenyl)borate, tropyliumtetra(3,5-difluorophenyl)borate, tropyliumtetra(pentafluorophenyl)borate, preferably trityltetra(o-fluorophenyl)borate, trityltetra(p-fluorophenyl)borate, trityltetra(m-fluorophenyl)borate, trityltetra(3,5-difluorophenyl)borate, trityltetra(pentafluorophenyl)borate, tropyliumtetra(o-fluorophenyl)borate, tropyliumtetra(p-fluorophenyl)borate, tropyliumtetra(m-fluorophenyl)borate, tropyliumtetra(3,5-difluorophenyl)borate, tropyliumtetra(pentafluorophenyl)borate and more preferably trityltetra(pentafluorophenyl)borate and tropyliumtetra(pentafluorophenyl)borate.

Borate of the sixth class is represented by the formula

[R¹⁶ ₂M]⁺[BR¹⁴R¹⁵X²X³]⁻ XII

where R¹⁶ is a cyclopentadienyl group, substituted-cyclopentadienyl group, indenyl group and substituted indenyl group; M is Cr, Mu, Fe, Co, Ni and like transition metal; R¹⁴, R¹⁵, X² and X³ each are the same as defined in formula VIII. The substituting group for cyclopentadienyl or indenyl group is a halogen atom and a C₁-C₂₀, preferably C₁-C₁₂ hydrocarbon group.

Specific examples of the sixth class borate include ferroceniumtetraphenylborate, ferroceniumtetra(o-tolyl)borate, ferroceniumtetra(p-tolyl)borate, ferroceniumtetra(m-tolyl)borate, ferroceniumtetra(o-fluorophenyl)borate, ferroceniumtetra(p-fluorophenyl)borate, ferroceniumtetra(m-fluorophenyl)borate, ferroceniumtetra(3,5-difluorophenyl)borate, ferroceniumtetra(pentafluorophenyl)borate, preferably ferroceniumtetra(o-fluorophenyl)borate, ferroceniumtetra(p-fluorophenyl)borate, ferroceniumtetra(m-fluorophenyl)borate, ferroceniumtetra(3,5-difluorophenyl)borate, ferroceniumtetra(pentafluorophenyl)borate, and more preferably ferroceniumtetra(pentafluorophenyl)borate.

Borate of the seventh class is represented by the formula

[L³]⁺[(CX⁴)ₑ(BX⁵)_{f}X⁶ _{g}]^{h-} XIII

where L³ is the same as defined in formula XI; X⁴, X⁵, X⁶, e, f, g and h each are the same as defined in formula IX. The seventh class borate exemplarily includes trityl-1-carbaundecaborate, trityl-1-carbadodecaborate, trityl-1-carbadecaborate, trityl-6-carbaundecaborate, trityl-7-carbaundecaborate, trityl-7,8-dicarbaundecaborate, trityl-2,9-dicarbaundecaborate, tropylium-1-carbaundecaborate, tropylium-1-carbadodecaborate, tropylium-1-carbadecaborate, tropylium-6-carbaundecaborate, tropylium-7-carbaundecaborate, tropylium-7,8-dicarbaundecaborate, or tropylium-2,9-dicarbaundecaborate.

Borate of the eighth class is represented by the formula

[R¹⁶ ₂M]⁺[(CX⁴)ₑ(BX⁵)_{f}X⁶ _{g}]^{h-} XIV

where R¹⁶ and M each are the same as defined in formula XII; X⁴, X⁵, X⁶, e, f, g and h each are the same as defined in formula IX. The borate includes ferrocenium-1-carbaundecaborate, ferrocenium-1-carbadodecaborate, ferrocenium-1-carbadecaborate, ferrocenium-6-carbaundecaborate, ferrocenium-7-carbaundecaborate, ferrocenium-7,8-dicarbaundecaborate, ferrocenium-2,9-dicarbaundecaborate or the like.

Borate of the ninth class is represented by the formula 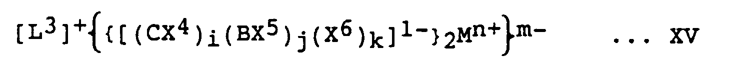 wherein L³ is the same as defined in formula IX; and X⁴, X⁵, X⁶, m, i, j, k, l, n and m each are the same as defined in formula X. Borate of the ninth class includes
tritylbis(nonahydride-1,3-dicarbaunaborate)cobaltate (III),
tritylbis(undecahydride-7,8-dicarbaundecaborate)ferrate (III),
tritylbis(undecahydride-7,8-dicarbaundecaborate)cobaltate (III),
tritylbis(undecahydride-7,8-dicarbaundecaborate)nickelate (III),
tritylbis(decahydridedicarbadodecaborate)cobaltate (III),
tritylbis(undecahydride-7-carbaundecaborate)chromate (III),
tritylbis(undecahydride-7-carbaundecaborate)manganate (IV),
tritylbis(undecahydride-7-carbaundecaborate)cobaltate (III),
tritylbis(undecahydride-7-carbaundecaborate)nickelate (IV),
tropyliumbis(nonahydride-1,3-dicarbaunaborate)cobaltate (III),
tropyliumbis(undecahydride-7,8-dicarbaundecaborate)ferrate (III),
tropyliumbis(undecahydride-7,8-dicarbaundecaborate)cobaltate (III),
tropyliumbis(undecahydride-7,8-dicarbaundecaborate)nickelate (III),
tropyliumbis(dedecahydridedicarbadodecaborate)cobaltate (III),
tropyliumbis(undecahydride-7-carbaundecaborate)chromate (III),
tropyliumbis(undecahydride-7-carbaundecaborate)manganate (IV),
tropyliumbis(undecahydride-7-carbaundecaborate)cobaltate (III), and
tropyliumbis(undecahydride-7-carbaundecaborate)nickelate (IV).

Borate of the tenth class is represented by the formula 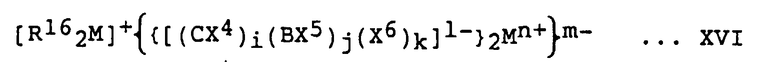 wherein R¹⁶ and M each are the same as defined in formula XII; and X⁴, X⁵, X⁶, M, i, j, k, l, n and m each are the same as defined in formula X. This class of borate includes
ferroceniumbis(nonahydride-1,3-dicarbaunaborate)cobaltate (III),
ferroceniumbis(undecahydride-7,8-dicarbaundecaborate)ferrate (III),
ferroceniumbis(undecahydride-7,8-dicarbaundecaborate)cobaltate (III),
ferroceniumbis(undecahydride-7,8-dicarbaundecaborate)nickelate(III),
ferroceniumbis(decahydridedicarbadodecaborate)cobaltate(III),
ferroceniumbis(undecahydride-7-carbaundecaborate)chromate (III),
ferroceniumbis(undecahydride-7-carbaundecaborate)manganate (IV),
ferroceniumbis(undecahydride-7-carbaundecaborate)cobaltate (III), or
ferroceniumbis(undecahydride-7-carbaundecaborate)nickelate (IV).

The modified organoaluminum compound (E) for addition to the catalyst composition components (A)-(D) according to the invention results from the reaction of an organoaluminum compound with water, and it usually has in its molecule an Al-O-Al bond within the number of 1 to 100, preferably 1 to 50. The reaction is effected usually in the presence of an inert hydrocarbon, typically an aliphatic hydrocarbon such as pentane, hexane, or heptane, an alicyclic hydrocarbon such as cyclohexane, or an aromatic hydrocarbon such as benzene, toluene, or xylene. Particularly preferred are the aliphatic and aromatic hydrocarbons.

Suitable organoaluminum compounds are those of the formula

R¹⁷ _{y}AlX⁷ _{3-y} XVII

where R¹⁷ is a hydrocarbon chain such as an alkyl, alkenyl, aryl and arakyl group of a carbon number of 1 to 18, preferably 1 to 12, X⁷ is a halogen or hydrogen atom, and y is an integer of 1 ≤ y ≤ 3.
Trialkylaluminums are preferred in which the alkyl group is a methyl, ethyl, propoyl, isopropyl, butyl, isobutyl, pentyl, hexyl, octyl, decyl or dodecyl group among which the methyl group is most preferred.

The mol ratio of water to organoaluminum compound is usually in the range of 0.25:1 to 1.2:1, preferably 0.5:1 to 1:1. Reaction conditions may be at from -70 to 100°C, preferably -20 to 20°C, and for 5 minutes to 24 hours, preferably 10 minutes to 5 hours. There may be used a water of crystallization contained in a hydrate such as copper sulfate hydrate, or aluminum sulfate hydrate. Alternatively, a supply of water may be sought from such components which can produce water in the reaction system. It has been found that methylaluminoxane, a reaction product of an alkylaluminum and water, is particularly suitable for use as the component (E).

The catalyst composition comprising components (A)-(D) and additionally component (E) may be, if necessary, supported on an inorganic carrier such as of a magnesium compound, alumina, silica, silica-alumina and the like, and/or a particulate polymer carrier.

The inventive catalyst compositions are prepared by mutual contact of the various components (A)-(D) and (E) in the following sequences which are indicated for the sake of brevity by the arrows.
1. (A) ← (B) ← (C) ← (D)
2. (A) ← (B) ← (D) ← (C)
3. (A) ← (C) ← (B) ← (D)
4. (A) ← (C) ← (D) ← (B)
5. (A) ← (D) ← (B) ← (C)
6. (A) ← (D) ← (C) ← (B)
7. (B) ← (A) ← (C) ← (D)
8. (B) ← (A) ← (D) ← (C)
9. (B) ← (C) ← (A) ← (D)
10. (B) ← (C) ← (D) ← (A)
11. (B) ← (D) ← (A) ← (C)
12. (B) ← (D) ← (C) ← (A)
13. (C) ← (A) ← (B) ← (D)
14. (C) ← (A) ← (D) ← (B)
15. (C) ← (B) ← (A) ← (D)
16. (C) ← (B) ← (D) ← (A)
17. (C) ← (D) ← (A) ← (B)
18. (C) ← (D) ← (B) ← (A)
19. (D) ← (A) ← (B) ← (C)
20. (D) ← (A) ← (C) ← (B)
21. (D) ← (B) ← (A) ← (C)
22. (D) ← (B) ← (C) ← (A)
23. (D) ← (C) ← (A) ← (B)
24. (D) ← (C) ← (B) ← (A)
25. (D) ← (B) ← (A) ← (B) ← (C)
26. (B) ← (D) ← (A) ← (B) ← (C)
27. (D) ← (A), (B) and (C), the order of addition of the last three being optional.
28. (D) ← (B) ← (A), (B) and (C), the order of addition of the last three being optional.
29. (D) ← (B) ← (A) and (C), the order of addition of the last two being optional.
30. (B) ← (D) ← (A), (B) and (C), the order of addition of the last three being optional.
31. (E) ← (D) ← (A), (B) and (C), the order of addition of the last three being optional.
32. (D) ← (E) ← (A), (B) and (C), the order of addition of the last three being optional.
33. (E) ← (D) ← (B) ← (A), (B) and (C), the order of addition of the last three being optional.
34. (E) ← (B) ← (D) ← (A), (B) and (C), the order of addition of the last three being optional.
35. (D) ← (B) ← (E) ← (A), (B) and (C), the order of addition of the last three being optional.
36. (D) ← (E) ← (B) ← (A), (B) and (C), the order of addition of the last three being optional.
37. (B) ← (E) ← (D) ← (A), (B) and (C), the order of addition of the last three being optional.
38. (B) ← (D) ← (E) ← (A), (B) and (C), the order of addition of the last three being optional.

It has been found that the sequences 10, 11, 18 and 22-38 are preferable.

The contacting operation may be carried out without the use of any solvent, but preferably in the presence of some inert hydrocarbon solvent such as benzene, hexane, toluene and xylene at a temperature of -100°C to 200°C, preferably -50° to 100°C, for about 10 minutes to 50 hours, preferably 30 minutes to 24 hours.

The amount of addition of each of components (B) and (C) is usually in the range of 0.01-1,000 mols, preferably 0.1-100 mols, more preferably 0.5-50 mols, per mol of component (A).

The amount of component (D) is represented by the atomic ratio of boron in component (D) to transition metal in component (A) which usually is 0.1 to 1,000, preferably 0.2-100.

The amount of component (E) is represented by the atomic ratio of aluminum in (E) to transition metal in component (A) which usually is in the range of 0.1 to 1,000, preferably 1-100, more preferably 1-80. The amount of (E) relative to component (D) is not particularly restricted, but may be 0.1-1,000, preferably 0.1-100, in terms of aluminum/boron ratio.

The amount of the inventive catalyst is preferably 0.0001g-1g based on transition metal in component (A) against 1 gram of a carrier, if the latter is used.

The inert hydrocarbon solvents used in the preparation of the catalyst compositions may be removed by precipitation, drying or other suitable means, but may be carried over from any given sequence of contact of the inventive components, or left intact even when the catalyst is put to use.

Preferred combinations of components (A)-(D) are exemplified in the following, to which additional component (E) may be added.

### Combination 1

- Component (A):: tetraalcoxyzirconium such as tetrapropoxyzirconium and tetrabutoxyzirconium
- Component (B):: alkylaluminum hydride such as diethylaluminum hydride and diisobutylaluminum hydride
- Component (C):: indene and indene derivative such as methyl indene, and cyclopentadiene and its derivative such as methylcyclopentadiene and dimethylcyclopentadiene
- Component (D):: triaryl boron compound such as tri(pentafluorophenyl) borane.

### Combination 2

- Component (A):: the same as in combination 1
- Component (B):: the same as in combination 1
- Component (C):: the same as in combination 1
- Component (D):: boron-containing ate-complex such as tributylammonium tetra(pentafluorophenyl) borate, N,N-dimethylanilium tetra(pentafluorophenyl) borate, N,N-diethylanilium tetra(pentafluorophenyl) borate, trithyl tetra(pentafluorophenyl) borate, tropylium tetra (pentafluorophenyl) borate and ferrocenium tetra(pentafluorophenyl) borate.

### Combination 3

- Component (A):: the same as in combination 1
- Component (B):: the same as in combination 1
- Component (C):: bisindenylethane, cyclopentadienylfluorenyl isopropane, fluorene compound or compound of the formula (CP)_{L}SiR¹¹ _{4-L} such as dimethylsilylbiscyclopentadiene.
- Component (D):: triarylboron compound such as tri(pentafluorophenyl) borane.

### Combination 4

- Component (A):: the same as in combination 1
- Component (B):: the same as in combination 1
- Component (C):: the same as in combination 3
- Component (D):: the same as in combination 2

In the practice of the invention, the components (A)-(D) or (A)-(E) may be formulated into a catalyst ready for use in the polymerization of olefins. Alternatively, (A)-(C) may be initially contacted together, followed by the addition of component (D) into the reaction system. Further alternatively, components (A)-(D) may be first contacted together and then with component (E) in the reaction system thereby enhancing the catalytic activity. Still alternatively, component (D) or component (E) may be supplemented during the polymerization reaction to ensure full catalytic performance.

The amount of component (E) when added to the polymerization system should be adjusted such that the aluminum/transition metal atomic ratio remain in the range of 0.1-1,000, preferably 1-100.

Starting olefins useful for the purpose of the invention are α-olefins, cyclic olefins, dienes, trienes and styrene homologs.

Eligible α-olefins are those having a carbon number of 2 to 12, preferably 2 to 8, and chosen from ethylene, propylene, butene-1, hexene-1, 4-methylpentene-1 and the like. They may be homopolymerized or copolymerized as by alternating, random or block copolymerization processes. Exemplified as α-olefin copolymers are those of ethylene with an α-olefin comonomer of a carbon number of 3 to 12, preferably 3 to 8, such as ethylene-propylene, ethylene-butene-1, ethylene-hexene-1 or ethylene-4-methylpentene-1, or of propylene with an α-olefin comonomer of a carbon number of 3 to 12, preferably 3 to 8, such as propylene-butene-1, propylene-4-methypentene-1, propylene-4-methylbutene-1, propylene-hexene-1 or propylene-octene-1. In either copolymer, the content of the comonomer may be variable within the range of less than 90% by mol of total monomer. Generally, ethylene-based copolymers have a comonomer content of not more than 40%, preferably smaller than 30%, more preferably below 20%, whereas propylene-based copolymers have a similar content in the range of 1 to 90%, preferably 5 to 90%, more preferably 10 to 70%, each such percentage being by mol based on total monomer.

Suitable cyclic olefins include those having a carbon number of 3 to 24, preferably 3 to 18, such as cyclopentene, cyclobutene, cyclohexene, 3-methylcyclohexene, cyclooctene, cyclodecene, tetracyclodecene, octacyclodecene, norbornene, 5-methyl-2-norbornene, 5-ethyl-2-norbornene, 5,5,6-trimethyl-2-norbornene and the like. They may be copolymerized usually with a given α-olefin in which instance the content of the cyclic olefin in the resulting copolymer is in the range of 1 to 50% by mol, preferably 2 to 50% by mol.

Suitable dienes and trienes are polyenes of a carbon number of 4 to 26, preferably 6 to 26. Examples include butadiene, 1,3-pentadiene, 1,4-pentadiene, 1,4-hexadiene, 1,5-hexadiene, 1,3-cyclohexadiene, 1,4-cyclohexadiene, 1,9-decadiene, 1,3-tetradecadiene, 2,6-dimethyl-1,5-heptadiene, 2-methyl-2,7-octadiene, 2,7-dimethyl-2,6-octadiene, 2,3-diemthylbutadiene, ethylidene norbornene, dicyclopentadiene, isoprene, 1,3,7-octatriene, 1,5,9-decatriene and the like. Chain dienes or trienes copolymerizable with a given α-olefin are usually contained in the copolymer in an amount of 0.1 to 50% by mol, preferably 0.2 to 10% by mol.

Eligible styrene homologs are styrene and styrene derivatives such as t-butylstyrene, α-methylstyrene, p-methylstyrene, divinylbenzene, 1,1-diphenylethylene, N,N-dimethyl-p-aminoethylstyrene, N,N-diethyl-p-aminostyrene and the like.

The catalyst of the invention may be suitably used to reform olefin homopolymers or copolymers by further polymerization with a polar monomer such as an unsaturated carboxylate including methyl acrylate, methyl methacrylate, butyl methacrylate, dimethyl maleate, diethyl maleate, monomethyl maleate, diethyl fumarate, dimethyl itaconate and the like. The content of the polar monomer in the reformed polymer is usually in the range of 0.1 to 10% by mol, preferably 0.2 to 2% by mol.

The inventive catalyst may be applied to slurry, solution and vapor polymerization processes. Slurry and vapor phase modes of reaction may be conveniently chosen which are conducted in a substantially oxygen-free, moisture-free state and in the presence of or in the absence of an inert solvent. Suitable solvents may be aliphatic hydrocarbons such as hexane, heptane and the like, aromatic hydrocarbons such as benzene, toluene, xylene and the like and alicyclic hydrocarbons such as cyclohexane, methylcyclohexane and the like. Reaction temperatures may be at from 20 to 200°C, preferably 50 to 100°C, reaction pressures at from atmospheric to 70 kg/cm²G, preferably atmospheric to 20 kg/cm²G and reaction timelengths at from 5 minutes to 10 hours, preferably 5 minutes to 5 hours.

The molecular weight of a polymer to be formed can be effectively controlled by feeding a predetermined amount of hydrogen into the reaction system, although this control may be also effected by adjusting the reaction temperature, molar ratio of the catalyst and other parameters.

There may be used some scavengers for removing moisture from the reaction system. Such scavengers include a trialkylaluminum such as trimethylaluminum, triethylaluminum, tripropylaluminum, triisopropylaluminum and triisobutylaluminum, the aforesaid modified organoaluminum, a modified organo-aluminum having a branched alkyl group, an organo-lithium such as butyl lithium, and an organo-magnesium such as diethyl magnesium, butyl magnesium and butyl magnesium chloride.

The inventive catalyst may be suitably used for a multi-stage mode of polymerization involving different hydrogen concentrations, monomer concentrations, polymerization pressures and temperatures and other reaction parameters.

It is also possible to prepare beforehand a pre-catalyst containing a small amount of a polymer (produced according to the invention) and use such pre-catalyst for full-scale polymerization of olefins.

The invention will be further described by way of the following examples.

### Preparation of Modified Organo-Aluminum Compound

13 grams of cupric sulfate pentahydrate were taken into a 300 ml three-necked flask equipped with an electromagnetic stirrer and suspended in 50 ml of toluene. 150 ml of trimethylaluminum (1 mmol/ml concentration) were added in droplets to the resulting suspension at 0°C over 2 hours. Reaction was continued at 25°C for 24 hours. The reaction product was filtrated with toluene removed, thereby obtaining 4 grams of a white crytalline methylalminoxane (MAO).

### Evaluation of Polymer Properties

Melt Index (MI) measured in accordance with ASTM D 1238-57T.

Density measured in accordance with ASTM D 1505-68.

Melting Point measured by a differential scanning calorimeter (DSC) where a 5 mg sample was held at 180°C for 3 minutes, cooled to 0°C at 10°C per minute, held at 0°C for 10 minutes and finally warmed at 10°C per minute.

Molecular Weight Distribution (Mw/Mn) measured by a gel permeation chromatography at 135°C using an orthodichlorobenzene solvent.

### Inventive Example 1

### Preparation of Transition Metal Catalyst Component

A 300 ml three-necked, stirrer equipped flask was fed with 150 ml toluene, 3.3 grams zirconium tetrachloride and 2.3 grams indene and stirred at room temperature for 30 minutes. The reaction mixture was added with droplets of 2.3 grams catechole borane at 0°C and thereafter stirred at room temperature for 24 hours. The resulting catalyst component in solution had a concentration in terms of Zr of 0.062 mmol/ml.

### Contact between Transition Metal Catalyst Component and Promotor

3 ml of the above solution were added with 3.7 ml toluene solution of methylaluminoxane (1 mmol/ml Al concentration) and stirred at room temperature for 30 minutes, followed by addition of 0.2 mmol triethylammonium tetra(pentafluorophenyl) borate. The whole was stirred at room temperature for 3 hours.

### Polymerization

A 3 liter stainless steel autoclave equipped with stirrer was purged with nitrogen, followed by addition of 1 liter refined toluene and 2 mg (Zr) of the above catalyst. The admixture was heated to 60°C and charged with a mixed gas (butene-1/ethylene mol ratio 0.25) to a pressure level of 9 kgf/cm²G (1 kgf/cm²G = 98.1 kPaG) thereby initiating the polymerization. The reaction was continued for 2 hours with a continuous charge of a mixed gas (butene-1/ethylene mol ratio 0.05) with a total pressure maintained at 9 kgf/cm²G. Upon completion of the polymerization reaction, excess gas was expelled and the reaction product when cooled was taken out to provide 20 grams of a white polymer. Analysis indicated a catalytic activity of 10 kg/g Zr, a polymer density of 0.9230 g/cm³, a melting point of 117.5°C and a melt index (MI) of 1.1 g/10 min.

### Inventive Example 2

### Preparation of Transition Metal Catalyst Component

The procedure of Inventive Example 1 was followed except that 3.3 grams tetrapropoxy zirconium, 4.6 grams indene and 3.2 grams diisobutylaluminum hydride were used. The resulting catalyst component in solution had a concentration by Zr of 0.062 mmol/ml.

### Contact between Transition Metal Catalyst Component and Promotor

The procedure of Inventive Example 1 was followed except that 0.4 mmol dimethylaluminum tetra(pentafluorophenyl) borate was used.

### Polymerization

The procedure of Inventive Example 1 was followed except that the catalyst was added in an amount by Zr of 1.5 mg. The reaction product was a 123 grams white polymer, analytically indicating a catalytic activity of 83 kg/g Zr, a polymer density of 0.9170 g/cm³, a melting point of 118.2°C, a MI of 1.2 g/10 min and a Mw/Mn of 6.7.

### Inventive Example 3

### Preparation of Transition Metal Catalyst Component

The procedure of Inventive Example 1 was followed except that 3.8 grams tetrabenzyl zirconium, 2.6 grams cyclopentadiene and 1.3 grams lithium aluminum triethoxyhydride were used. The resulting catalyst component in solution had a concentration by Zr of 0.06 mmol/ml.

### Contact between Transition Metal Catalyst Component and Promotor

The procedure of Inventive Example 1 was followed except that 3.6 mmol toluene solution (1 mmol/ml Al concentration) of methylaluminoxane was used.

### Polymerization

The procedure of Inventive Example 1 was followed except that the catalyst was added in an amount by Zr of 2 mg followed by addition of 0.05 mmol ferrocenium tetra(pentafluorophenyl) borate. There was obtained a 50 grams white polymer, analytically indicating a catalytic activity of 25 kg/g Zr, a polymer density of 0.9150 g/cm³, a melting point of 114.2°C, a MI of 1.3 g/10 min and a Mw/Mn of 6.2.

### Inventive Example 4

### Preparation of the Catalyst

The procedure of Inventive Example 1 was followed except that 3.1 grams dibutoxydichloro zirconium, 9.2 grams indene and 9.1 grams lithium aluminum halide were used and that a slurry sample of 5 ml (zirconium 0.2 mmol atom) was added with 4 ml toluene solution of methylaluminoxane (1 mmol/ml Al concentration) and stirred at room temperature for 30 minutes, followed by addition of 0.2 mmol anilinium 1-carbadodeca borate with stirring for 3 hours.

### Polymerization

The procedure of Inventive Example 1 was followed except that the catalyst was added in an amount by Zr of 0.5 mg. The reaction product was a 15 grams polymer, analytically indicating a catalytic activity of 30 kg/g Zr, a polymer density of 0.9250 g/cm³, a melting point of 119.7°C, a MI of 7.1 g/10 min and a Mw/Mn of 6.7.

### Inventive Example 5

### Preparation of the Catalyst

The procedure of Inventive Example 4 was followed except that 3.5 grams dibutoxydichlorozirconium and 11 grams trimethylsilylcyclopentadiene were used and that a sample (zirconium 0.2 mmol atom) was added with 4 ml toluene solution of methylaluminoxane (1 mmol/ml Al concentration) and stirred at room temperature for 30 minutes, followed by addition of 0.2 mmol tributylammonium-bis-(nonahydro-1,3-di-carbauna borate) cobaltate (III) with stirring for 3 hours.

### Polymerization

The procedure of Inventive Example 4 was followed. There was obtained a 10 grams polymr, analytically indicating a catalytic activity of 20 kg/g Zr, a polymer density of 0.9105 g/cm³, a melting point of 111.2°C, a MI of 1.4 g/10 min and Mw/Mn of 7.3

### Inventive Example 6

### Preparation of the Catalyst

The procedure of Inventive Example 1 was followed except that 4.2 grams tetrabutoxy zirconium, 7.5 grams 1,3-dimethylcyclopentadiene and 9.1 grams diisobutylaluminum hydride were used and that a sample (Zr 0.2 mmol atom) of the resulting solution was added with 4 ml toluene solution of methylaluminoxane (1 mmol/ml Al concentration) and stirred at room temperature, followed by addition of 0.2 mmol trityltetra(pentafluorophenyl) borate with stirring for 3 hours.

### Polymerization

The procedure of Inventive Example 4 was followed, thereby providing a 200 grams polymer which analytically indicated a catalytic activity of 400 kg/g Zr, a polymer density of 0.9150 g/cm³, a melting point of 114.5°C, a MI of 0.9 g/10 min and a Mw/Mn of 7.4.

### Inventive Example 7

### Preparation of the Catalyst

The procedure of Inventive Example 1 was followed except that 2.3 grams hafnium tetrachloride, 4.7 grams indene and 11.4 grams sodium borohydride were used and that a sample (Zr 0.2 mmol atom) of the resulting solution was added with 0.2 mmol trityl-1-calbaundeca borate and stirred at room temperature for 3 hours, followed by addition of 4 ml toluene solution (1 mmol/ml Al concentration) of methylaluminoxane with stirring for 30 minutes.

### Polymerization

The procedure of Inventive Example 4 was followed, thereby providing a 10 grams polymer which analytically indicated a catalytic activity of 20 kg/g Hf, a polymer density of 0.9200 g/cm³, a melting point of 118.5°C, a MI of 2.5 g/10 min and a Mw/Mn of 7.2.

### Inventive Example 8

### Preparation of the Catalyst

The procedure of Inventive Example 1 was followed except that 3.4 grams tetrabutoxy titanium, 5.3 grams cyclopentadiene and 22.5 grams in droplets of diisobutylaluminum hydride were used and that a sample (Ti 0.2 mmol atom) of the resulting solution was added with 4 ml toluene solution (1 mmol/ml Al concentration) of methylaluminoxane and stirred at room temperature for 30 minutes, followed by addition of 0.2 mmol tri(pentafluorophenyl) borane with stirring for 3 hours.

### Polymerization

The procedure of Inventive Example 4 was followed, providing a 95 grams polymer which indicated a catalytic activity of 190 kg/g Ti, a polymer density of 0.925 g/cm³, a melting point of 118.7°C, a MI of 1.3 g/10 min and a Mw/Mn of 6.9.

### Inventive Example 9

### Preparation of the Catalyst

The procedure of Inventive Example 1 was followed except that 4.9 grams tetrapropyl hafnium, 5.3 grams cyclopentadiene and 5.8 grams zinc borohydride and that a sample (hafnium 0.2 mmol atom) of the resulting solution was added with 4 ml toluene solution (1 mmol/ml Al concentration) of methylaluminoxane and stirred at room temperature for 30 minutes, followed by addition of 0.2 mmol ferrocenium-2,9-dicarbaundeca borate with stirring for 3 hours.

### Polymerization

The procedure of Inventive Example 4 was followed, whereby there was obtained a 10 grams polymer indicating a catalytic activity of 20 kg/g Hf, a polymer density of 0.9250 g/cm³, a melting point of 117.9°C, a MI of 0.3 g/10 min and a Mw/Mn of 7.2.

### Inventive Example 10

### Preparation of the Catalyst

The procedure of Inventive Example 1 was followed except that 2.3 grams tetrachloro zirconium, 6.5 grams methylcyclopentadiene and 9.1 grams in droplets of diisobutylaluminum hydride were used and that a sample (Zr 0.2 mmol atom) of the resulting solution was added with 4 ml toluene solution (1 mmol/ml Al concentration) of methylaluminoxane and stirred at room temperature for 30 minutes, followed by addition of 0.2 mmol trityl-bis-(nonahydride-1,3-dicarbauna borate) cobaltate (III) with stirring for 3 hours.

### Polymerization

The procedure of Inventive Example 4 was followed, whereby there was obtained a 80 grams polymer indicating a catalytic activity of 160 kg/g Zr, a polymer density of 0.9200 g/cm³, a melting point of 115.1°C, a MI of 8.3 g/10 min and a Mw/Mn of 7.5.

### Inventive Example 11

### Preparation of the Catalyst

The procedure of Inventive Example 1 was followed except that 3.3 grams tetrapropoxy zirconium, 9.2 grams indene and 9.3 grams diisobutylaluminum hydride were used and that a sample (hafnium 0.2 mmol atom) of the resulting solution was added with 10 ml toluene solution (1 mmol/ml Al concentration) of methylaluminoxane and stirred at room temperature for 30 minutes, followed by addition of 0.2 mmol ferrocenium-bis(undecahydride-7,8-dicarbaundeca borate) nickelate (III) with stirring for 3 hours.

### Polymerization

The procedure of Inventive Example 4 was followed, providing a 100 grams polymer which indicated a catalytic activity of 200 kg/g Zr, a polymer density of 0.9105 g/cm³, a melting point of 114.3°C, a MI of 1.3 g/10 min and a Mw/Mn of 8.5.

### Inventive Example 12

### Preparation of the Catalyst

The procedure of Inventive Example 1 was followed except that 3.3 grams tetrapropoxy zirconium, 9.3 grams bisindenylethane and 9.1 grams diisobutylaluminum hydride were used and that a sample of 3 ml of the resulting solution (Zr 0.058 mmol/ml concentration) was added with 4.4 ml toluene solution of methylaluminoxane (1 mmol/ml Al concentration) and stirred at room temperature for 30 minutes, followed by addition of 0.2 mmol triethylammonium tetra(o-fluorophenyl) borate with stirring for 3 hours.

### Polymerization

The procedure of Inventive Example 1 was followed except that ethylene was charged in place of a mixed butene-1 gas. The resulting 40 grams white polymer was analyzed to show a catalytic activity of 20 kg/g Zr, a polymer density of 0.9510 g/cm³, a melting point of 132°C, a MI of 3.5/10 min and a Mw/Mn of 6.3.

### Comparative Example 1

The procedure of Inventive Example 1 was followed except that catechole borane was not used. The resulting polymer was analyzed to show a catalytic activity of 0.3 kg/g Zr, a polymer density of 0.9250 g/cm³, a melting point of 119.5°C and a MI of 1.3 g/10 min.

### Comparative Example 2

The procedure of Inventive Example 1 was followed except that indene was not used. Catalytic activity was 0.003 kg/g Zr. Polymer fusion point was 123.5°C.

### Comparative Example 3

The procedure of Inventive Example 1 was followed except that triethylammonium tetra(pentafluorophenyl) borate was not used. Catalytic activity was 5 kg/g Zr. The resulting polymer had a density of 0.9200 g/cm³, a melting point of 118.5°C and a MI of 2.3 g/10 min.

### Comparative Example 4

The procedure of Inventive Example 1 was followed except that tri(pentafluorophenyl) borane was not used. Catalytic activity was 0.005 kg/g Zr.

## Claims

1. A catalyst useful for the production of olefinic polymers which comprises a compound (A) of the formula
Me¹(OR¹)ₚR² _{q}X¹ _{4-p-q} I
where R¹ and R² each are C₁-C₂₄ hydrocarbon moieties, X¹ is a halogen atom, Me¹ is titanium, zirconium or hafnium, p is 0 ≤ p≤ 4, q is 0 ≤ q ≤ 4, and p+q is 0 ≤ p+q ≤4;
a metal hydride compound (B) consisting at least of one of the compounds of the formulae:
(Ba) Me²HaR³ ₃₋ₐ II
(Bb) Me³[Me²HbR⁴(OR⁵)_{4-b-c}]_{Z} III
and 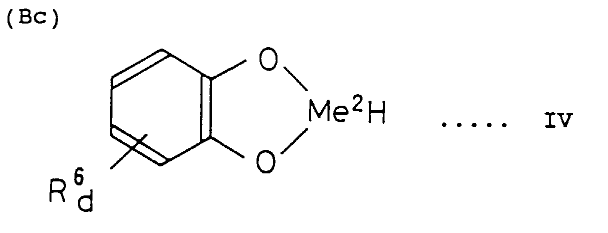 wherein R³, R⁴, R⁵ and R⁶ each are C₁-C₂₄ hydrocarbon moieties, Me² is an element of Group 13 in the Periodic Table, Me³ is an element of Group 1, 2 or 12 in the Periodic Table, Z is a valence of Me³, a, b, c and d are 1 ≤ a ≤ 3, 1 ≤ b ≤ 4, 0 ≤ c ≤ 3, 0 ≤ d ≤ 4, respectively and 1 ≤ b+c ≤ 4;
an organocyclic compound (C) having two or more conjugated double-bonds; and a borate and/or borane (D).

2. A catalyst according to claim 1 further including a modified organoaluminum compound (E) containing Al-O-Al bonds and derived from reacting an organoaluminum compound with water.

3. A catalyst according to claim 1 wherein said compound (B) and said compound (C) each are used in an amount of from 0.01 to 1,000 mols, preferably from 0.1 to 100 mols per mol of said compound (A).

4. A catalyst according to claim 1 wherein said borate and/or borane (D) is used in an amount of from 0.1 to 1,000, preferably from 0.2 to 100 by an atomic ratio of boron in (D) to transition metal in said compound (A).

5. A catalyst according to claim 2 wherein said compound (E) is used in an amount of from 0.01 to 1,000, preferably from 0.1 to 100, by an atomic ratio of aluminum in (E) to boron in (D).

6. A process for the polymerization of olefinic hydrocarbons in the presence of the catalyst resulting from contacting the components (A)-(D) of any of the preceding claims in which said olefinic hydrocarbons are homopolymerized or copolymerized at a temperature in the range of 20°C to 200°C and a pressure in the range of atmospheric to 70 kg/cm².

7. A process according to claim 6 wherein said olefinic hydrocarbons include α-olefins, dienes, trienes and styrene homologs.

8. A catalyst according to claim 1 wherein said organocyclic compound (C) is a compound selected from the group consisting of (a) an organocyclic hydrocarbon compound having two or more conjugated double bonds and (b) organosilicon compound having a cyclic hydrocarbon group containing two or more conjugated double bonds.

9. A catalyst according to claim 8 wherein said organocyclic hydrocarbon compound is a compound having a cyclopentadiene structure.

10. A catalyst according to claim 1 wherein said R¹ and R² each are selected from the group consisting of alkyl group, alkenyl group, allyl group, aryl group and aralkyl group.

## Patentansprüche

1. Ein Katalysator einsetzbar zur Herstellung von Olefinpolymeren, der eine Verbindung (A) der Formel
Me¹(OR¹)ₚR² _{q}X¹ _{4-p-q}
umfaßt, wobei R¹ und R² jeweils C₁-C₂₄ Kohlenwasserstoffgruppen sind, X¹ ein Halogenatom ist, Me¹ Titan, Zirkonium oder Hafnium ist, p durch 0 ≤ p ≤ 4, q durch 0 ≤ q ≤ 4, und p+q durch 0 ≤ p+q ≤ 4 beschrieben wird; eine Metallhydridverbindung (B), bestehend aus zumindest einer der Verbindungen der Formeln:
(Ba) Me²HaR³ ₃₋ₐ II
(Bb) Me³[Me²HbR⁴(OR⁵)_{4-b-c}]_{Z} III
und 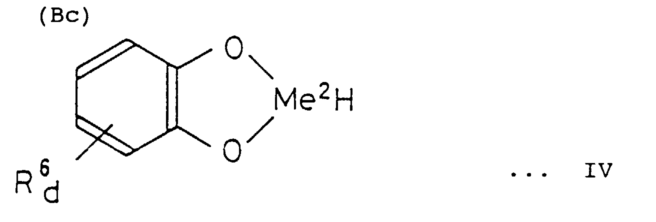 wobei R³, R⁴, R⁵ und R⁶ jeweils C₁-C₂₄ Kohlenwasserstoffgruppen sind, Me² ein Element der Gruppe 13 im Periodensystem ist, Me³ ein Element der Gruppe 1, 2 oder 12 im Periodensystem ist, Z der Valenz von Me³ entspricht, a, b, c und d durch 1 ≤ a ≤ 3, 1 ≤ b ≤ 4, 0 ≤ c ≤ 3, 0 ≤ d ≤ 4 und 1 ≤ b+c ≤ 4 beschrieben wird; eine organozyklische Verbindung (C) mit zwei oder mehr konjugierten Doppelbindungen; und ein Borat und/oder Boran (D).

2. Ein Katalysator nach Anspruch 1 weiterhin mit einer modifizierten Organoaluminiumverbindung (E), enthaltend AL-O-Al-Bindungen und abgeleitet aus der Reaktion einer Organoaluminiumverbindung mit Wasser.

3. Ein Katalysator nach Anspruch 1, wobei die Verbindung (B) und die Verbindung (C) jeweils in einer Menge von 0,01 bis 1.000 Mol, vorzugsweise von 0,1 bis 100 Mol pro Mol der Verbindung (A) eingesetzt werden.

4. Ein Katalysator nach Anspruch 1, wobei das Borat und/oder das Boran (D) in einer Menge von 0,1 bis 1.000, vorzugsweise von 0,2 bis 100, bezogen auf ein Atomverhältnis von Bor in (D) zum Übergangsmetall in der Verbindung (A), eingesetzt werden.

5. Ein Katalysator nach Anspruch 2, wobei die Verbindung (E) in einer Menge von 0,01 bis 1.000, vorzugsweise von 0,1 bis 100, bezogen auf ein Atomverhältnis von Aluminium in (E) zu Bor in (D), eingesetzt wird.

6. Ein Verfahren zur Polymerisierung von olefinischen Kohlenwasserstoffen in der Anwesenheit des Katalysators, das sich aus dem Miteinander-in-Verbindung-Bringen der Komponenten (A)-(D) nach irgendeinem der vorstehenden Ansprüche ergibt, wobei die olefinischen Kohlenwasserstoffe bei einer Temperatur im Bereich von 20°C bis 200°C und bei einem Druck im Bereich von Atmosphärendruck bis 70 kg/cm² homopolymerisiert oder copolymerisiert werden.

7. Ein Verfahren nach Anspruch 6, wobei die olefinischen Kohlenwasserstoffe α-Olefine, Diene, Triene und Styrenhomologe einschließen.

8. Ein Katalysator nach Anspruch 1, wobei die organozyklische Verbindung (C) eine Verbindung ist, ausgewählt aus der Gruppe, die aus (a) einer organozyklischen Kohlenwasserstoffverbindung mit zwei oder mehr konjugierten Doppelbindungen und (b) einer Organosiliziumverbindung mit einer zyklischen Kohlenwasserstoffgruppe, enthaltend zwei oder mehr konjugierte Doppelbindungen, besteht.

9. Ein Katalysator nach Anspruch 8, wobei die organozyklische Kohlenwasserstoffverbindung eine Verbindung mit einer Cyclopentadienstruktur ist.

10. Ein Katalysator nach Anspruch 1, wobei R¹ und R² jeweils ausgewählt sind aus der Gruppe, bestehend aus einer Alkyl-, Alkenyl-, Allyl-, Aryl- und Aralkylgruppe.

## Revendications

1. Catalyseur utile pour la production de polymères oléfiniques qui comprend un composé (A) de formule
Me¹(OR¹)ₚR² _{q}X¹ _{4-p-q} I
où R¹ et R² sont chacun des portions d'hydrocarbure en C₁-C₂₄, X¹ est un atome d'halogène, Me¹ est le titane, le zirconium ou l'hafnium, p est 0 ≤ p ≤ 4, q est 0 ≤ q ≤ 4 et p+q est 0 ≤ p+q ≤ 4 ;
un composé d'hydrure métallique (B) constitué par au moins un des composés des formules :
(Ba) Me²HaR³ ₃₋ₐ II
(Bb) Me³[Me²HbR⁴(OR⁵)_{4-b-c}]_{Z} III
et 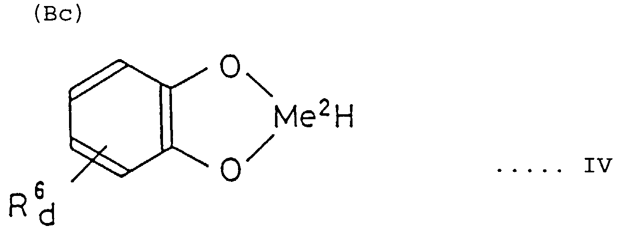 dans lesquels R³, R⁴, R⁵ et R⁶ sont chacun des portions d'hydrocarbure en C₁-C₂₄, Me² est un élément du groupe 13 du Tableau Périodique des Eléments, Me³ est un élément du groupe 1, 2 ou 12 du Tableau Périodique des Eléments, Z est une valence de Me³, a, b, c et d sont 1 ≤ a ≤ 3, 1 ≤ b ≤ 4, 0 ≤ c ≤ 3, 0 ≤ d ≤ 4, respectivement et 1 ≤ b+c ≤ 4 ;
un composé organocyclique (C) ayant au moins deux liaisons doubles conjuguées ; et un borate et/ou un borane (D).

2. Catalyseur selon la revendication 1 comprenant en outre un composé d'organoaluminium modifié (E) contenant les liaisons Al-O-Al et provenant de la réaction d'un composé d'organoaluminium avec de l'eau.

3. Catalyseur selon la revendication 1, dans lequel ledit composé (B) et ledit composé (C) sont chacun utilisés en quantité allant de 0,01 à 1000 moles, de préférence de 0,1 à 100 moles par mole dudit composé (A).

4. Catalyseur selon la revendication 1, dans lequel ledit borate et/ou borane (D) est utilisé en une quantité allant de 0,1 à 1000, de préférence de 0,2 à 100 d'un rapport atomique de bore dans (D) au métal de transition dans ledit composé (A).

5. Catalyseur selon la revendication 2, dans lequel ledit composé (E) est utilisé en quantité allant de 0,01 à 1000, de préférence de 0,1 à 100, d'un rapport atomique d'aluminium dans (E) au bore dans (D).

6. Procédé pour la polymérisation d'hydrocarbures oléfiniques en présence du catalyseur résultant de la mise en contact des composants (A) à (D) de n'importe laquelle des revendications précédentes, dans lequel lesdits hydrocarbures oléfiniques sont homopolymérisés ou copolymérisés à une température dans la fourchette de 20°C à 200°C et sous une pression dans la fourchette de la pression atmosphérique à 70 kg/cm².

7. Procédé selon la revendication 6, dans lequel lesdits hydrocarbures oléfiniques comprennent des α-oléfines, diènes, triènes et homologues de styrène.

8. Catalyseur selon la revendication 1, dans lequel ledit composé organocyclique (C) est un composé choisi dans le groupe constitué par (a) un composé d'hydrocarbure organocyclique ayant au moins deux liaisons doubles conjuguées et (b) un composé d'organosilicium ayant un groupe d'hydrocarbure cyclique contenant au moins deux liaisons doubles conjuguées.

9. Catalyseur selon la revendication 8, dans lequel ledit composé d'hydrocarbure organocyclique est un composé ayant une structure de cyclopentadiène.

10. Catalyseur selon la revendication 1, dans lequel lesdits R¹ et R² sont chacun choisis dans le groupe constitué par le groupe alkyle, le groupe alcényle, le groupe allyle, le groupe aryle et le groupe aralkyle.
